Europäisches Patentamt

European Patent Office

Office européen des brevets

(11) Veröffentlichungsnummer: **0 027 190**
**B1**

(12) **EUROPÄISCHE PATENTSCHRIFT**

(45) Veröffentlichungstag der Patentschrift:
06.06.84

(51) Int. Cl.³: **A 01 K 61/02**

(21) Anmeldenummer: 80105769.6

(22) Anmeldetag: 25.09.80

(54) Portionsspender für Futter.

(30) Priorität: 15.10.79 DE 2941706

(43) Veröffentlichungstag der Anmeldung:
22.04.81 Patentblatt 81/16

(45) Bekanntmachung des Hinweises auf die Patenterteilung:
06.06.84 Patentblatt 84/23

(84) Benannte Vertragsstaaten:
AT BE CH DE FR GB IT LI NL SE

(56) Entgegenhaltungen:
DE - A - 2 735 927
FR - A - 2 206 046
US - A - 2 772 659
US - A - 3 416 497

(73) Patentinhaber: Tetra Werke Dr.rer.nat. Ulrich Baensch
GmbH, Herrenteich 78, D-4520 Melle 1 (DE)

(72) Erfinder: Riepe, Waldemar, Elsa-Brandström-Strasse 3,
D-4500 Osnabrück (DE)

(74) Vertreter: Depmeyer, Lothar, Auf der Höchte 30,
D-3008 Garbsen 1 (DE)

**Beschreibung**

Die Erfindung betrifft einen Portionsspender für flockiges oder körniges Futter, insb. Fischfutter, mit einem Vorratsbehälter für das Futter, der in Bodennähe in einer Querwand einen Schlitz aufweist, aus dem das Futter austreten kann.

Bei bekannten Portionsspendern dieser Art (DE-A-2 735 927) wird das Futter durch einen im Abstand von seinem freien Ende zur Bildung einer Dosierkammer ausgesparten Kolben über den erwähnten Schlitz ausgeschoben. Um dabei den Kolben durch sich einklemmendes Futter nicht zu blockieren, kann das Ausschieben des Futters nur langsam vollzogen werden.

Der Erfindung liegt die Aufgabe zugrunde, die eingangs genannten Portionsspender so auszubilden, daß das Futter im wesentlichen ruckartig ausgestoßen werden kann, um das Futter fächerartig über einen größeren Bereich verteilen zu können.

Zur Lösung dieser Aufgabe ist erfindungsgemäß der Vorratsbehälter quer zu seiner geschlitzten Querwand auf dem Boden eines den Vorratsbehälter umschließenden Behälter verschiebbar gelagert und zudem besitzt der Boden des Vorratsbehälters an dessen mit der geschlitzten Querwand versehenen Ende eine ein Fenster aufweisende Verlängerung, deren freies Ende einen zum Durchtritt dieser Verlängerung bemessenen Schlitz in der Querwand des Behälters in der Ruhestellung des Vorratsbehälters verschließt und mit seinem Fenster durch Verschieben des Vorratsbehälters vor die mit dem Schlitz versehene Querwand des Behälters gelangt.

Aufgrund des den Vorratsbehälter umschließenden weiteren Behälters und der am Vorratsbehälter befindlichen Verlängerung wird somit der Spender im Ruhezustand verschlossen; die Verlängerung verschließt den in der Querwand des Behälters befindlichen Schlitz. Soll jedoch der Spender Futter abgeben, so erfolgt eine Verschiebebewegung des Vorratsbehälters innerhalb des äußeren Behälters; dabei oder bei der folgenden Bewegung des Vorratsbehälters gelangt eine bemessene Futtermenge in das Fenster der Verlängerung; diese vom Inhalt des Vorratsbehälters unabhängige Futtermenge wird durch die ruckartig vollziehbare Förderbewegung des Vorratsbehälters vor die Querwand des Behälters geführt, wobei sie sich fächerartig zerstreut.

Vorteilhafte Ausgestaltungen der Erfindung sind Gegenstand der abhängigen Patentansprüche.

In der Zeichnung ist ein Ausführungsbeispiel der Erfindung dargestellt. Es zeigt

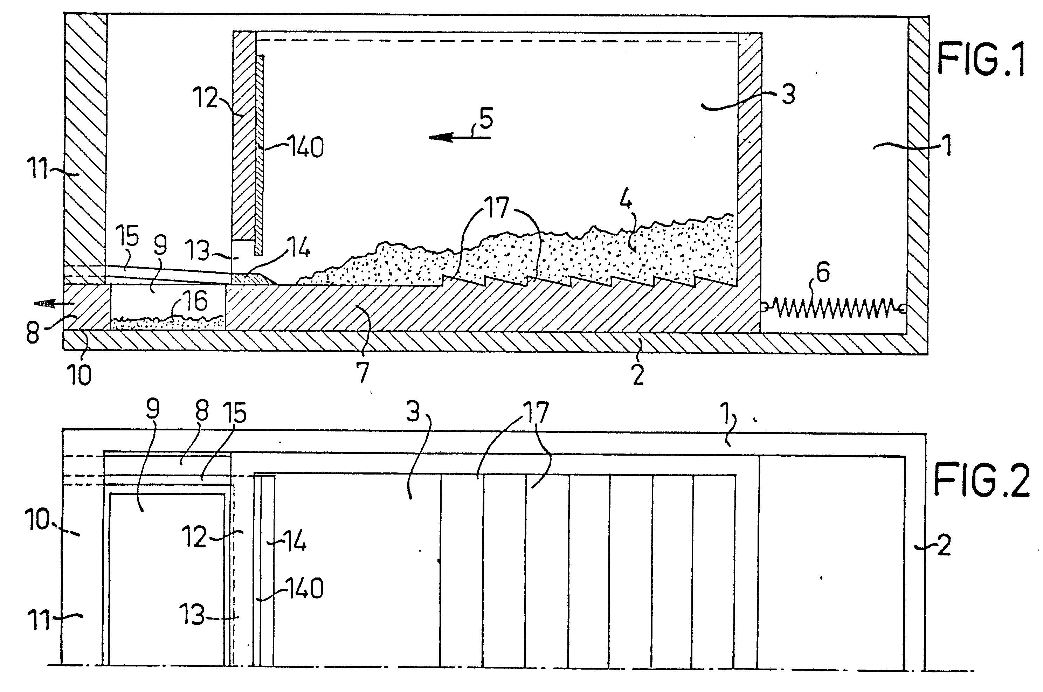

Fig. 1 einen Portionsspender für Zierfischfutter im senkrechten Längsschnitt und

Fig. 2 eine Hälfte des Spenders gemäß Fig. 1 in der Draufsicht.

Der Spender besteht im wesentlichen aus zwei quaderförmigen Behältern, und zwar einem äußeren Behälter 1, auf dessen Boden 2 der Behälter 3 als Vorratsbehälter für das flockige Fischfutter 4 in Richtung des Pfeiles 5 gegen die Wirkung einer Zugfeder 6 od. dgl. verschiebbar ist. In der Stellung gemäß Zeichnung kann der Vorratsbehälter 3 zweckmäßigerweise an seinem hinteren Ende an einem Anschlag od. dgl. anliegen. Aus der Ruhestellung gemäß Zeichnung kann der Vorratsbehälter 3 von Hand in Richtung des Pfeiles 5 bewegt werden. Vorzugsweise wird jedoch ein Elektromagnet vorgesehen, mit dem der Vorratsbehälter 3 ruckartig verschiebbar ist.

Beide Behälter 1, 3 können durch einen nicht näher dargestellten Deckel verschlossen sein.

Der Boden 7 des Vorratsbehälters 3 ist nach vorne hin erweitert; diese Verlängerung ist mit 8 bezeichnet und mit einem Fenster 9 ausgestattet. Dabei greift der vor dem Fenster 9 liegende Teil der Verlängerung 8 in einen Schlitz 10 der vorderen Seitenwand 11 des Behälters 1 dichtend ein. Der Schlitz 10 wird also in der Ruhestellung des Vorratsbehälters 3 gut verschlossen.

Auch in der vorne liegenden Querwand 12 des Vorratsbehälters 3 befindet sich ein Schlitz 13, der sich ebenso wie der Schlitz 10 im wesentlichen über die Breite des zugehörigen Vorratsbehälters erstreckt, jedoch durch einen Schieber 140 bezüglich seiner wirksamen Höhe verändert werden kann.

In den Schlitz 13 ragt noch ein Querschaber 14 hinein, der vorne angeschärft ist und an seinen Enden mit sich nach hinten in Richtung auf die Seitenwand 11 erstreckenden Armen 15 versehen ist, die neben dem Fenster 9 liegen und in der Seitenwand 11 befestigt sind. Dieser Querschaber 14 liegt satt auf dem Boden 7 des Vorratsbehälters 3 auf und behindert die Verschiebung des Vorratsbehälters 3 nicht.

Auf dem Boden 7 befindet sich eine Einrichtung, die eine gewisse Förderbewegung des Futters 4 bei einer Bewegung des Vorratsbehälters 3 in Richtung des Pfeiles 5 ermöglicht. Diese Einrichtung besteht aus sägezahnartigen Querrippen 17 in der Weise, daß die Rippenhöhe zum Schlitz 13 hin größer ist als die Rippenhöhe auf der gegenüberliegenden Rippenseite.

Erfolgt eine ruckartige Bewegung des Vorratsbehälters 3 in Richtung des Pfeiles 5 so wird das Futter 4 in dieselbe Richtung gefördert, wobei eine Portion durch den Schlitz 13 in das Fenster 9 gelangt. Diese Portion ist mit 16 bezeichnet. Bereits mit dieser Bewegung oder aber mit der nächsten Bewegung des Vorratsbehälters 3 gelangt das Fenster 9 vor die Seitenwand 11 in der Weise, daß das Futter bzw. die Portion 16 nach unten hin, aber auch nach oben hin fächerartig entweichen kann. Diese Streubewegung kommt auch durch die Beschleunigung zustande, die der Vorratsbehälter 3 erfährt; da zudem das Fenster 9 über seine gesamte Länge vor die Seitenwand 11 gelangt, wird die gesamte Portion 16 verabreicht.

Hat der Vorratsbehälter 3 wieder seine Stellung gemäß Zeichnung eingenommen, so ist der Behälter 1 hermetisch verschlossen. Der vordere Teil der Verlängerung 8 verschließt — wie schon erwähnt — den Schlitz 10. Erst mit einem neuen Arbeitsspiel wird der Schlitz 10 kurzfristig geöffnet, um dabei die folgende Portion 16 zu zerstreuen.

Die verabreichte Futtermenge ist im Regelfalle so gut über einen großen Flächenabschnitt verteilt, daß der Spender auch für größere Aquarien verwendet werden kann. Im Falle einer elektrischen Betätigung kann auch eine Schaltuhr benutzt werden, um die Futterversorgung auch über einen größeren Zeitraum hinweg sicherzustellen.

## Patentansprüche

1. Portionsspender für flockiges oder körniges Futter, insb. Fischfutter, mit einem Vorratsbehälter (3) für das Futter (4), der in Bodennähe in einer Querwand (12) einen Schlitz (13) aufweist, aus dem das Futter austreten kann, dadurch gekennzeichnet, daß der Vorratsbehälter (3) quer zu seiner geschlitzten Querwand (12) auf dem Boden (2) eines den Vorratsbehälter umschließenden Behälters (1) verschiebbar gelagert ist und der Boden (7) des Vorratsbehälters an dessen mit der geschlitzten Querwand (12) versehenen Ende eine ein Fenster (9) aufweisende Verlängerung (8) besitzt, deren freies Ende einen zum Durchtritt dieser Verlängerung bemessenen Schlitz (10) in der Querwand (11) des Behälters in der Ruhestellung des Vorratsbehälters verschließt und mit seinem Fenster durch Verschieben des Vorratsbehälters vor die mit dem Schlitz versehene Querwand des Behälters gelangt.

2. Spender nach Anspruch 1, dadurch gekennzeichnet, daß in den Schlitz (13) des Vorratsbehälters (3) ein Schaber (14) hineinragt, der unverschiebbar gelagert ist und auf dem Boden (7) des Vorratsbehälters aufliegt.

3. Spender nach Anspruch 1, dadurch gekennzeichnet, daß die Höhe des Schlitzes (13) des Vorratsbehälters (3) veränderbar ist.

4. Spender nach Anspruch 1, dadurch gekennzeichnet, daß auf der Bodenfläche des Vorratsbehälters (3) die Förderung des Futters (4) verbessernde Querrippen (17) angeordnet sind.

5. Spender nach Anspruch 4, dadurch gekennzeichnet, daß die Querrippen (17) sägezahnartig gestaltet sind in der Weise, daß die Rippenhöhe im vorderen, dem Schlitz (13) des Vorratsbehälters (3) zugekehrten Teil größer ist als auf der gegenüberliegenden Seite der Querrippen.

6. Spender nach Anspruch 1, dadurch gekennzeichnet, daß der Vorratsbehälter (3) elektromagnetisch gegen eine Rückstellkraft (Feder 6) verschiebbar ist.

7. Spender nach Anspruch 1 und 2, dadurch gekennzeichnet, daß der Schaber (14) an der Querwand (11) des den Vorratsbehälter (3) umschließenden Behälters (1) befestigt ist, die von der Verlängerung (8) des Vorratsbehälters durchsetzt ist.

8. Spender nach Anspruch 1 und 2, dadurch gekennzeichnet, daß der Vorratsbehälter (3) und/oder der weitere Behälter (1) mit einem Deckel verschließbar sind.

9. Spender nach Anspruch 2, dadurch gekennzeichnet, daß der Schaber (14) unmittelbar am Fensterrand auf dem Boden (7) des Vorratsbehälters (3) aufliegt.

10. Spender nach Anspruch 1, dadurch gekennzeichnet, daß beide Behälter (1, 3) etwa quaderförmig gestaltet sind.

## Claims

1. Portion dispenser for flocculent or granular feedstuffs, especially fish food, having a storage container (3) for the food (4) which container has a slot (13) in a transverse wall (12) in the vicinity of the base through which slot the food can be discharged, characterized in that the storage container (3) is displaceably mounted, transversely to its slotted transverse wall (12), on the base (2) of a container (1) which encloses the storage container, and the base (7) of the storage container — at its end provided with the slotted transverse wall (12) — has an extension (8) provided with a window (9), the free end of said extension sealing a slot (10) in the transverse wall (11) of the container in the rest position of the storage container, said slot being dimensioned for the passage of this extension therethrough, and the free end of said extension passes in front of the slotted transverse wall of the container with its window by displacement of the storage container.

2. Dispenser according to claim 1, characterized in that a scraper (14), which is non-displaceably mounted and rests on the base (7) of the storage container, protrudes into the slot (13) in the storage container (3).

3. Dispenser according to claim 1, characterized in that the height of the slot (13) in the storage container (3) is variable.

4. Dispenser according to claim 1, characterized in that transverse ribs (17) are disposed on the base surface of the storage container (3) for improving the delivery of the food (4).

5. Dispenser according to claim 4, characterized in that the transverse ribs (17) are sawtoothed in such a way that the rib height in the front portion facing the slot (13) in the storage container (3) is greater than on the opposite side of the transverse ribs.

6. Dispenser according to claim 1, characterized in that the storage container (3) is electromagnetically displaceable relative to a restoring force (spring 6).

7. Dispenser according to claims 1 and 2, characterized in that the scraper (14) is secured to the transverse wall (11) of the container (1) which encloses the storage container (3), said transverse wall being traversed by the extension (8) of the storage container.

8. Dispenser according to claims 1 and 2, characterized in that the storage container (3) and/or the additional container (1) is/are sealable by a cover.

9. Dispenser according to claim 2, characterized in that the scraper (14) rests directly on the window edge on the base (7) of the storage container (3).

10. Dispenser according to claim 1, characterized in that both containers (1, 3) are approximately parallelepiped in shape.

## Revendications

1. Distributeur de portions de nourriture en flocons ou en grains pour l'animal, notamment de nourriture pour le poisson, comprenant un réservoir (3) pour la nourriture présentant, à proximité du fond, une fente (13) qui est ménagée dans une paroi transversale (12) et de laquelle la nourriture peut sortir, caractérisé en ce que le réservoir (3) est monté coulissant transversalement à sa paroi transversale (12) ayant la fente sur le fond (2) d'un récipient (1) entourant le réservoir et le fond (7) du réservoir possède à son extrémité munie de la paroi transversale ayant la fente un prolongement qui présente une fenêtre, dont l'extrémité libre ferme, en la position de repos du réservoir, une fente (10) ménagée dans la paroi transversale (11) du récipient et dimensionnée pour le passage de ce prolongement et dont la fenêtre arrive, lorsque le réservoir coulisse, devant la paroi transversale du récipient ayant la fente.

2. Distributeur suivant la revendication 1, caractérisé en ce que dans la fente (13) du réservoir (3) pénètre une raclette (14) qui est montée sans possibilité de coulisser, et qui repose sur le fond (7) du réservoir.

3. Distributeur suivant la revendication 1, caractérisé en ce que la hauteur de la fente (13) du réservoir (3) peut être modifiée.

4. Distributeur suivant la revendication 1, caractérisé en ce que sur la surface du fond du réservoir (3) sont disposées des nervures transversales (17) améliorant le transport de la nourriture (4).

5. Distributeur suivant la revendication 4, caractérisé en ce que les nervures transversales (17) sont en forme de dents de scie, en sorte que la hauteur des nervures dans la partie antérieure se trouvant du côté de la fente (13) du réservoir (3) est plus grande que du côté opposé.

6. Distributeur suivant la revendication 1, caractérisé en ce que le réservoir (3) peut coulisser par voie électromagnétique à l'encontre d'une force de rappel (ressort 6).

7. Distributeur suivant la revendication 1 et 2, caractérisé en ce que la raclette (14) est fixée à la paroi transversale (11) du récipient (1) entourant le réservoir (3), cette paroi transversale étant traversée par le prolongement (8) du réservoir.

8. Distributeur suivant la revendication 1 et 2, caractérisé en ce que le réservoir (3) et le récipient (1) qui s'élargit peuvent être fermés par un couvercle.

9. Distributeur suivant la revendication 2, caractérisé en ce que la raclette (14) repose directement au bord de la fenêtre sur le fond (7) du réservoir (3).

10. Distributeur suivant la revendication 1, caractérisé en ce que les deux récipients (1, 3) ont une forme à peu près parallélépipédique.

FIG.1

FIG.2

0 027 190